# EUROPEAN PATENT APPLICATION

(11) **EP 4 557 484 A1**
(43) Date of publication of application: **21.05.2025**
(21) Application number: 23901906.0
(22) Date of filing: 17.02.2023
(51) Int. Cl.: H01M 50/342

(54) **INSULATING FILM, BATTERY CELL, BATTERY AND ELECTRIC APPARATUS**

(30) Priority: 13.12.2022 CN 202223328484 U
(71) Applicant: Contemporary Amperex Technology (Hong Kong) Limited, Hong Kong (HK)
(72) Inventor: QUAN, Chao, Ningde, Fujian 352100 (CN); PU, Yujie, Ningde, Fujian 352100 (CN); LI, Yao, Ningde, Fujian 352100 (CN); CHEN, Xiaobo, Ningde, Fujian 352100 (CN)
(74) Representative: Kraus & Lederer PartGmbB
(86) International application number: PCT/CN2023/076860
(87) International publication number: WO 2024/124688

(57) **Abstract**

The present application provides an insulation film, a battery cell, a battery and an electrical device. The insulation film is configured to wrap at least a part of a shell of the battery cell, and provided with a fragile portion configured to cover at least a part of a pressure relief mechanism in the battery cell mounted on the shell. In embodiments of the present application, the fragile portion is disposed on the insulation film and covers at least a part of the pressure relief mechanism, such that when the battery cell is thermally runaway, the insulation film less hinders the pressure relief mechanism, which ensures that the pressure relief mechanism can be timely actuated to meet the pressure relief need of the battery cell, reduce the risk of long-time accumulation of high-temperature and high-pressure substances in the battery cell, and improve safety of the battery cell.

## Description

### CROSS-REFERENCE TO RELATED APPLICATIONS

The present application claims priority to Chinese Patent Application No. 202223328484.1, filed on December 13, 2022 and entitled "INSULATION FILM, BATTERY CELL, BATTERY AND ELECTRICAL DEVICE", which is incorporated herein by reference in its entirety.

### TECHNICAL FIELD

The present application relates to the technical field of batteries, and in particular, to an insulation film, a battery cell, a battery and an electrical device.

### BACKGROUND

Battery cells are widely used in electronic devices such as a mobile phone, a notebook computer, an electric power cart, an electric vehicle, an electric airplane, an electric ship, an electric toy car, an electric toy ship, an electric toy airplane, and a power tool. The battery cells may include a nickel-cadmium battery cell, a nickel-hydrogen battery cell, a lithium-ion battery cell, a secondary alkaline zinc-manganese battery cell, and the like.

However, existing battery cells may have safety hazards such as explosion during use.

### SUMMARY

In view of the above problem, the present application provides an insulation film, a battery cell, a battery and an electrical device, which can improve safety of the battery.

An embodiment of the present application provides an insulation film that is configured to wrap at least a part of a shell of a battery cell. The insulation film is provided with a fragile portion that is configured to cover at least a part of a pressure relief mechanism in the battery cell mounted on the shell.

In the above solution, the fragile portion is disposed on the insulation film and covers at least a part of the pressure relief mechanism, such that when the battery cell is thermally runaway, the insulation film less hinders the pressure relief mechanism, which ensures that the pressure relief mechanism can be timely actuated to meet the pressure relief need of the battery cell, reduce the risk of long-time accumulation of high-temperature and high-pressure substances in the battery cell, and improve safety of the battery cell.

In some embodiments, the insulation film includes a film body. The fragile portion includes a nick structure disposed on the film body.

In the above solution, the nick structure is disposed on the film body, and compared with other positions of the film body, the position of the nick structure has a smaller thickness and a lower structural strength. Therefore, when the battery cell is thermally runaway, the nick structure will be more likely to be broken and ruptured under the action of an external force, thus forming a notch on the insulation film, which ensures that the pressure relief mechanism can be timely actuated, and the high-temperature and high-pressure substances can be timely expelled out of the battery cell, thereby improving the safety of the battery cell.

In some embodiments, the nick structure closes in to form a closed ring structure.

In the above solution, the nick structure closes in to form the closed ring structure, such that when the battery cell is thermally runaway, a center portion can be detached from the film body, thus forming a large notch on a position of the insulation film corresponding to the pressure relief mechanism to ensure that more high-temperature and high-pressure substances can timely leave the battery cell from the notch, thereby reducing the possibility of explosion of the battery cell and further improving the safety of the battery cell.

In some embodiments, an outer contour of the closed ring structure is disposed at least partially exceeding the pressure relief mechanism.

In the above solution, when the battery cell is thermally runaway, such design can ensure that the larger notch can be formed on the position of the insulation film corresponding to the pressure relief mechanism so as to ensure more high-temperature and high-pressure substances can timely leave the battery cell from the notch, thereby reducing the possibility of explosion of the battery cell and further improving the safety of the battery cell.

In some embodiments, a contour outline of the closed ring structure corresponds to that of the pressure relief mechanism.

In the above solution, the contour outline of the closed ring structure corresponds to that of the pressure relief mechanism, such that the alignment difficulty of the insulation film on the shell is reduced to ensure the positional accuracy between the insulation film and the shell. In addition, the alignment difficulty between the closed ring structure and the pressure relief mechanism may further be reduced to enable the closed ring structure and the pressure relief mechanism to be correspondingly disposed, such that when the battery cell is thermally runaway, the insulation film can be actuated at a corresponding position of the pressure relief mechanism to meet the pressure relief need and improve use safety of the battery cell.

In some embodiments, the nick structure is plural in number, and the plurality of nick structures are disposed on the film body at intervals.

In the above solution, the plurality of nick structures are disposed at intervals. That is, two adjacent nick structures do not intersect. Therefore, in the forming process of the nick structures, any positions of the insulation film will not be affected by dual or even multiple processes, which may reduce the risk of puncturing of the insulation film due to the processes, reduce the impact on the pressure relief mechanism and the shell due to the formation of the nick structures, and improve the preparation reliability of the battery cell.

In some embodiments, the nick structure includes a first nick segment and a second nick segment that are connected to each other, and extending directions of the first nick segment and the second nick segment intersect.

In the above solution, the first nick segment and the second nick segment are disposed to extend along different directions respectively, such that the insulation film is provided with nicks corresponding to different positions of a region of the pressure relief mechanism to ensure that when the battery cell is thermally runaway, and when the pressure relief mechanism is actuated at the different positions, the insulation film may be timely ruptured to meet the pressure relief need, which is applicable to different circumstances.

In some embodiments, the fragile portion is connected to the film body, and a structural strength of any positions of the fragile portion is less than that of the film body.

In the above solution, the fragile portion is disposed covering the pressure relief mechanism, such that the hindering impact of the insulation film on the pressure relief mechanism is further reduced, which ensures that the pressure relief mechanism can be timely actuated to meet the pressure relief need of the battery cell.

In some embodiments, the fragile portion can cover the pressure relief mechanism.

In the above solution, the fragile portion is disposed covering the pressure relief mechanism, such that the hindering impact of the insulation film on the pressure relief mechanism is further reduced, which ensures that the pressure relief mechanism can be timely actuated to meet the pressure relief need of the battery cell.

In some embodiments, a material of the fragile portion is different from that of other positions of the film body, and a material strength of the fragile portion is lower than that of the other positions of the film body.

In the above solution, the material strength of the fragile portion is set to be less than that of the other positions of the film body, such that the material strength of the fragile portion is lower than that of the film body, so as to meet the pressure relief need of the battery cell and improve safety of the pressure relief mechanism.

According to a second aspect, an embodiment of the present application provides a battery cell, including a shell, an electrode assembly, a pressure relief mechanism and the insulation film in any one of the foregoing embodiments. The electrode assembly is accommodated in the shell. The pressure relief mechanism is mounted on the shell. The insulation film wraps at least a part of the shell. The fragile portion is opposite to the pressure relief mechanism of the shell.

In some embodiments, the shell includes a first wall and a second wall. The pressure relief mechanism is mounted on the first wall. The battery cell further includes electrode terminals mounted on the second wall.

In the above solution, the electrode terminals are disposed on the second wall different from the first wall, so as to reduce the probability of shielding the electrode terminals by the insulation film, ensure normal work of the electrode terminals, and realize reliable transmission of electrical energy of the battery cell.

In some embodiments, the insulation film is disposed covering the first wall.

In the above solution, the pressure relief mechanism is disposed on the first wall, and the insulation film is disposed covering the first wall, which can ensure that all positions of the first wall are dielectrically separated from an external component through the insulation film while ensuring that the insulation need of the pressure relief mechanism is met. Such design makes the electrical energy stored in the battery cell unable to be transferred into an external structure through the first wall, thereby reducing the risk of electric leakage of the battery cell at a corresponding position of the first wall and improving the use safety of the battery cell.

In some embodiments, at least a part of the insulation film wraps all surfaces of the shell except the second wall. In other words, all the surfaces of the shell except the second wall are provided with the insulation film.

In the above solution, any surfaces of shell except the second wall are provided with part of a structure of the insulation film. Such design can increase the degree of coverage of the shell by the insulation film, thereby reducing the risk of electric leakage of a plurality of surfaces of the battery cell to further improve insulation performance and improve the use safety of the battery cell.

In some embodiments, the battery cell further includes a protective film connected to the first wall and covering the pressure relief mechanism. In a thickness direction of the first wall, a projection of the pressure relief mechanism is located within that of the fragile portion, and the projection of the fragile portion is located within that of the protective film.

By disposing the protective film, and in the thickness direction, by locating the projection of the pressure relief mechanism within that of the fragile portion and locating the projection of the fragile portion within that of the protective film, it is ensured that the battery cell can have a dual insulation effect at a corresponding position of the fragile portion, thereby improving insulation reliability.

In some embodiments, a shortest distance between an orthographic projection of the fragile portion on the protective film and an edge of the protective film is D that satisfies: D ≥ 2 mm. As an example, D may be one of 2 mm, 2.2 mm, 2.5 mm and 3 mm.

In the above solution, by setting D to D ≥ 2 mm, an edge of the fragile portion can be kept at a certain distance from the edge of the protective film, thereby in the forming process of the fragile portion, reducing the process impact on the edge of the protective film, reducing the probability of detaching the protective film from the first wall due to the formation of the fragile portion, and ensuring the structural reliability of the protective film.

According to a third aspect, an embodiment of the present application provides a battery, including the battery cell in any one of the foregoing embodiments.

According to a fourth aspect, an embodiment of the present application provides an electrical device, including the battery cell in any one of the foregoing embodiments. The battery cell is configured to provide electrical energy.

The foregoing description is merely an overview of the technical solutions of the present application. The following describes specific embodiments of the present application illustratively to enable a clearer understanding of the technical solutions of the present application, enable embodiment of the technical solutions based on the content of the specification, and make the foregoing and other objectives, features, and advantages of the present application more evident and comprehensible.

### BRIEF DESCRIPTION OF DRAWINGS

To describe the technical solutions of some embodiments of the present application more clearly, the following outlines the drawings used in the embodiments of the present application. Evidently, the drawings outlined below are merely a part of embodiments of the present application. A person of ordinary skill in the art may derive other drawings from the outlined drawings without making any creative efforts.
FIG. 1 is a brief schematic diagram of a vehicle according to an embodiment of the present application;
FIG. 2 is a schematic exploded view of a battery according to an embodiment of the present application;
FIG. 3 is a schematic structural diagram of a battery module shown in FIG. 2;
FIG. 4 is a schematic exploded view of the battery cell according to an embodiment of the present application;
FIG. 5 is a schematic structural diagram of an insulation film according to an embodiment of the present application;
FIG. 6 is a schematic structural diagram of another insulation film according to an embodiment of the present application;
FIG. 7 is a schematic structural diagram of yet another insulation film according to an embodiment of the present application;
FIG. 8 is a schematic structural diagram of still another insulation film according to an embodiment of the present application;
FIG. 9 is a schematic structural diagram of still yet another insulation film according to an embodiment of the present application;
FIG. 10 is a schematic structural diagram of a further insulation film according to an embodiment of the present application;
FIG. 11 is a schematic structural diagram of a battery cell according to an embodiment of the present application;
FIG. 12 is a schematic structural diagram of a yet further insulation film according to an embodiment of the present application;
FIG. 13 is a schematic structural diagram of a still further insulation film according to an embodiment of the present application; and
FIG. 14 is a schematic structural diagram of a still yet further insulation film according to an embodiment of the present application.

### List of reference numerals:

1000. vehicle;
100. battery; 200. controller; 300. motor; 400. box; 41. first box portion; 42. second box portion; 43. accommodation portion; 500. battery module;
10. battery cell; 11. shell; 111. housing; 112. end cap; 113. first wall; 114. second wall; 12. electrode assembly; 13. electrode terminal; 14. protective film; 15. current collection member;
20. insulation film; 21. fragile portion; 211. nick structure; 211a. first nick segment; 211b. second nick segment; 211c. third nick segment; 212. center portion; 22. film body;
T. pressure relief mechanism;
B. closed ring structure; and
Z. thickness direction.

### DETAILED DESCRIPTION OF EMBODIMENTS

To make the objectives, technical solutions, and advantages of embodiments of the present application clearer, the following gives a clear description of the technical solutions in the embodiments of the present application with reference to the accompanying drawings in the embodiments of the present application. Apparently, the described embodiments are merely a part of but not all of the embodiments of the present application. Based on the embodiments in the present application, all other embodiments obtained by a person of ordinary skill in the art without creative labor fall within the scope of protection of the present application.

Unless otherwise defined, all technical and scientific terms used in the present application have the same meanings as what is normally understood by a person skilled in the technical field of the present application. The terms used in the specification of the present application are merely intended to describe specific embodiments but not intended to limit the present application. The terms "include" and "contain" and any variations thereof used in the specification, claims, and brief description of accompanying drawings of the present application are intended as non-exclusive inclusion. The terms "first", "second", etc. in the specification and claims of the present application or in the accompanying drawings described above are used to distinguish between different objects, and are not used to describe a particular order or relationship of priority.

Reference to "embodiments" in this specification means that particular features, structures, or characteristics described with reference to the embodiments may be included in at least one embodiment of the present application. Occurrence of the phrase in various places in this specification does not necessarily refer to the same embodiment, nor is an independent or alternative embodiment that is mutually exclusive with other embodiments. It is understood explicitly and implicitly by a person skilled in the art that the embodiments described in this specification may be combined with other embodiments.

In the description of the embodiments of the present application, the term "and/or" describes only an association relationship between associated objects and represents that three relationships may exist. For example, A and/or B may represent the following three cases: only A exists, both A and B exist, and only B exists. In addition, the character "/" in this specification generally indicates an "or" relationship between the associated objects.

In the description of embodiments of the present application, the term "a plurality of" means two or more (including two). Similarly, "a plurality of groups" means two or more groups (including two groups), and "a plurality of pieces" means two or more pieces (including two pieces).

In the description of embodiments of the present application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of the present application, but not intended to indicate or imply that the indicated device or component is necessarily located in the specified direction or constructed or operated in the specified direction. Therefore, such terms are not to be understood as a limitation on embodiments of the present application.

In the descriptions of the embodiments of the present application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. A person of ordinary skill in the art can understand specific meanings of these terms in the embodiments of the present application as appropriate to specific situations.

The term "and/or" in the present application merely indicates an association relationship for describing related objects, and represents three possible relationships. For example, A and/or B may represent the following three circumstances: A alone, both A and B, and B alone. In addition, the character "/" in the present application generally indicates an "or" relationship between the front and back related objects.

In the embodiments of the present application, the same reference numerals indicate the same components, and detailed descriptions of the same components are omitted in different embodiments for the sake of brevity. Understandably, dimensions, such as thickness, length, and width of various components in the embodiments of the present application shown in the accompanying drawings, and dimensions, such as overall thickness, length, and width of an integrated apparatus are merely illustrative descriptions, but do not constitute any limitation on the present application.

"A plurality of" referred to in the present application means two or more (including two). In the present application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery, or the like, which is not limited in embodiments of the present application. The battery cell may be in a shape such as a cylinder, a flat body, a cuboid, which is also not limited in the embodiments of the present application. Depending on the form of packaging, the battery cell is generally classed into three types: cylindrical battery cell, prismatic battery cell, and pouch-type battery cell, which is also not limited in the embodiments of the present application.

A battery mentioned in the embodiments of the present application refers to a single physical module that includes one or more battery cells to provide a higher voltage and capacity. For example, the battery mentioned in the present application may include a module, a battery pack, or the like. The battery generally includes a box for packaging one or more battery cells. The box can prevent liquid or other foreign matter from affecting charging or discharging of the battery cells.

The battery cell includes an electrode assembly and an electrolyte solution. The electrode assembly is composed of a positive electrode plate, a negative electrode plate and a separator. The battery cell works primarily by relying on shuttling of metal ions between the positive electrode plate and the negative electrode plate. The positive electrode plate includes a positive current collector and a positive active material layer. A surface of the positive current collector is coated with the positive active material layer. A part of the positive current collector not coated with the positive active material layer protrudes from a part of the positive current collector coated with the positive active material layer. The part of the positive current collector not coated with the positive active material layer serves as a positive tab. Taking a lithium-ion battery as an example, a material of the positive current collector may be aluminum, and the positive active material may be lithium cobalt oxide, lithium iron phosphate, ternary lithium, lithium manganate, or the like. The negative electrode plate includes a negative current collector and a negative active material layer. A surface of the negative current collector is coated with the negative active material layer. A part of the negative current collector not coated with the negative active material layer protrudes from a part of the negative current collector coated with the negative active material layer. The part of the negative current collector not coated with the negative active material layer serves as a negative tab. A material of the negative current collector may be copper, and the negative active material may be carbon, silicon, or the like. In order to ensure passage of a high current without fusing off, the positive tab is plural in number and stacked together. A material of the separator may be polypropylene (PP), polyethylene (PE), or the like. In addition, the electrode assembly may be of a jelly-roll structure, and may also be of a stacked structure, which is not limited in the embodiments of the present application.

The battery cell further includes a shell, and the shell is configured to accommodate the electrode assembly and the electrolyte solution. The shell includes a housing and an end cap connected to the housing, and the housing and the end cap form an accommodation cavity to accommodate the electrode assembly and the electrolyte.

The development of battery technologies needs to simultaneously consider various design factors, such as energy density, cycle life, discharge capacity, charge and discharge rates, and other performance parameters, and in addition, it is also necessary to consider the safety of the battery.

A pressure relief mechanism on the battery cell exerts an important effect on the safety of the battery cell. For example, in a case of a short circuit, overcharge, or the like, thermal runaway may occur inside the battery cell, resulting in a surge in pressure. In this case, the internal pressure may be released outward through the actuation of the pressure relief mechanism to prevent explosion and fire of the battery cell.

The pressure relief mechanism refers to an element or component that is actuated to relieve an internal pressure or temperature when the internal pressure or temperature of the battery cell reaches a preset threshold. The threshold varies depending on design requirements. The threshold may depend on the material of one or more of the positive electrode plate, the negative electrode plate, the electrolyte solution and the separator in the battery cell. The internal pressure of the battery cell is a pressure inside the shell.

The pressure relief mechanism may be in the form of an explosion-proof valve, a gas valve, a pressure relief valve, a safety valve, or the like, and specifically, may be a pressure-sensitive element or structure. To be specific, when the internal pressure of the battery cell reaches a preset threshold, the pressure relief mechanism performs an action or an actuation portion disposed in the pressure relief mechanism is ruptured to form an opening or channel for releasing the internal pressure. The actuation portion may be formed by disposing a nick, a groove, a material with low strength, or the like.

"Actuated" mentioned in the present application means that the pressure relief mechanism performs an action or is activated to a given state so that the internal pressure of the battery cell is relieved. The action performed by the pressure relief mechanism may include, but is limited to, rupturing, shattering, tearing, or bursting open at least a part of the pressure relief mechanism, or the like. When the pressure relief mechanism is actuated, high-temperature and high-pressure substances inside the battery cell will be expelled as emissions out of an actuated position. In this way, the pressure of the battery cell can be relieved under a circumstance of a controllable pressure to avoid potential severer accidents.

The emissions out of the battery cell mentioned in the present application include but are not limited to: electrolyte solution, melted or split positive and negative electrode plates, fragments of the separator, reaction-induced high-temperature and high-pressure gases, flames, and the like.

During use of the battery cell, the inventor has noticed that the battery cell is prone to a risk of explosion.

The inventor has found through research that in order to meet the requirement of surface insulation of the battery cell, an insulation film will be disposed on an outer surface of the battery cell. The insulation films of part of the battery cells will cover the pressure relief mechanisms of the battery cells, and the insulation films on the pressure relief mechanisms will hinder the actuation of the pressure relief mechanisms of the battery cells, which is prone to an extreme event that the battery cells lose control and cannot relieve pressure safely and explode, resulting in safety hazards.

Based on the above problems found by the inventor, the present application provides an insulation film, a battery cell, a battery and an electrical device, which can reduce the risk of slippage of the insulation film relative to the electrode assembly.

The technical solution described in the embodiments of the present application is applicable to an electrical device that uses a battery. The electrical device is, for example, an electric power cart, an electric vehicle, a ship, a spacecraft, an electric toy, and an electric tool. The spacecraft is, for example, an airplane, a rocket, a space shuttle, and a spaceship. The electric toy includes, for example, a fixed or mobile electric toy, specifically such as an electric car toy, an electric ship toy, and an electric airplane toy. The electric tool includes, for example, an electric tool for metal cutting, an electric grinding tool, an electric assembly tool, and an electric tool for railways, specifically such as an electric drill, an electric grinder, an electric wrench, an electric screwdriver, an electric hammer, an electric impact drill, a concrete vibrator, and an electric planer.

The battery cell described in the embodiments of the present application is not limited to being applied to the electrical device described above, but for the sake of simplicity of description, the following embodiments are all illustrated by taking an electric vehicle as an example.

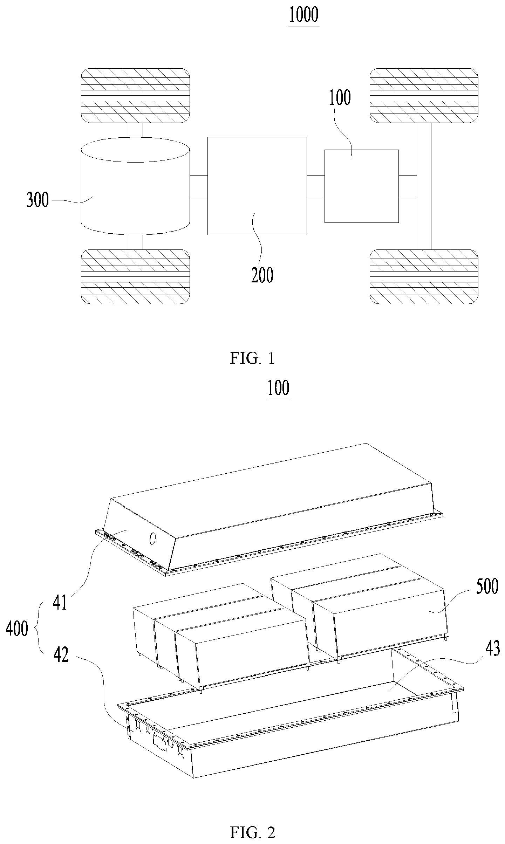

Referring to FIG. 1, a vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 may be disposed inside the vehicle 1000. Specifically, for example, the battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery to supply power to the motor 300, for example. The battery may be configured to start or navigate the vehicle 1000 or the like. Certainly, the battery 100 may also be configured to drive the vehicle 1000 to travel, and provide a drive for the vehicle 1000 in place of or partially in place of oil or natural gas.

FIG. 2 is a schematic exploded view of a battery provided by an embodiment of the present application. As shown in FIG. 2, the battery 100 includes a box 400 and a battery cell (not shown in FIG. 2), and the battery cell is accommodated in the box 400.

The box 400 is configured to accommodate the battery cell. The box 400 may be of various structures. In some embodiments, the box 400 may include a first box portion 41 and a second box portion 42. The first box portion 41 and the second box portion 42 fit and cover each other. The first box portion 41 and the second box portion 42 jointly define an accommodation portion 43 configured to accommodate the battery cell. The second box portion 42 may be of a hollow structure with an opening end. The first box portion 41 is of a plate-like structure. The first box portion 41 fits and covers the opening side of the second box portion 42 to form the box 400 with the accommodation portion 43. Alternatively, the first box portion 41 and the second box portion 42 may each be of a hollow structure with an opening side, and the opening side of the first box portion 41 fits and covers the opening side of the second box portion 42 to form the box 400 with the accommodation portion 43. Certainly, the first box portion 41 and the second box portion 42 may have various shapes, such as a cylinder or a cuboid.

In order to improve sealing between the first case body portion 41 and the second case body portion 42 after they are connected, a sealing member such as a sealant, a sealing ring, etc., may also be provided between the first case body portion 41 and the second case body portion 42.

Assuming that the first case body portion 41 fits over a top of the second case body portion 42, the first case body portion 41 may also be called an upper case cover and the second case body portion 42 may be called a lower case body.

There may be one or more battery cells in the battery 100. If there are a plurality of battery cells, the plurality of battery cells may be connected in series or in parallel or in parallel and series. Connected in parallel and series means that there are both series and parallel connections in the plurality of battery cells. The plurality of battery cells may be directly connected together in series or in parallel or in parallel and series, and then an entirety of the plurality of battery cells is accommodated in the box 400. Certainly, a plurality of battery cells may also be first connected in series or in parallel or in parallel and series to form a battery module 500, and then a plurality of battery modules 500 are connected in series or in parallel or in parallel and series to form an entirety and accommodated in the box 400.

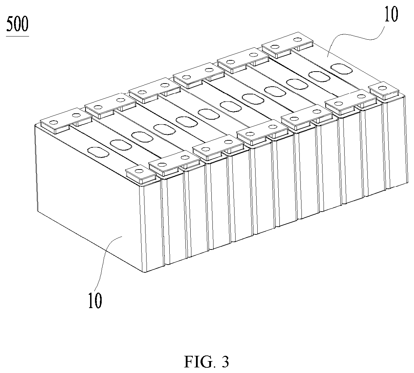

FIG. 3 is a schematic structural diagram of a battery module shown in FIG. 2. As shown in FIG. 3, in some embodiments, there are a plurality of battery cells 10. The plurality of battery cells 10 are first connected in series or in parallel or in parallel and series to form a battery module 500. A plurality of battery modules 500 are then connected in series or in parallel or in parallel and series to form an entirety and accommodated in the box.

The plurality of battery cells 10 in the battery module 500 are electrically connected through a busbar component to realize a parallel or series or parallel and series connection of the plurality of battery cells 10 in the battery module 500.

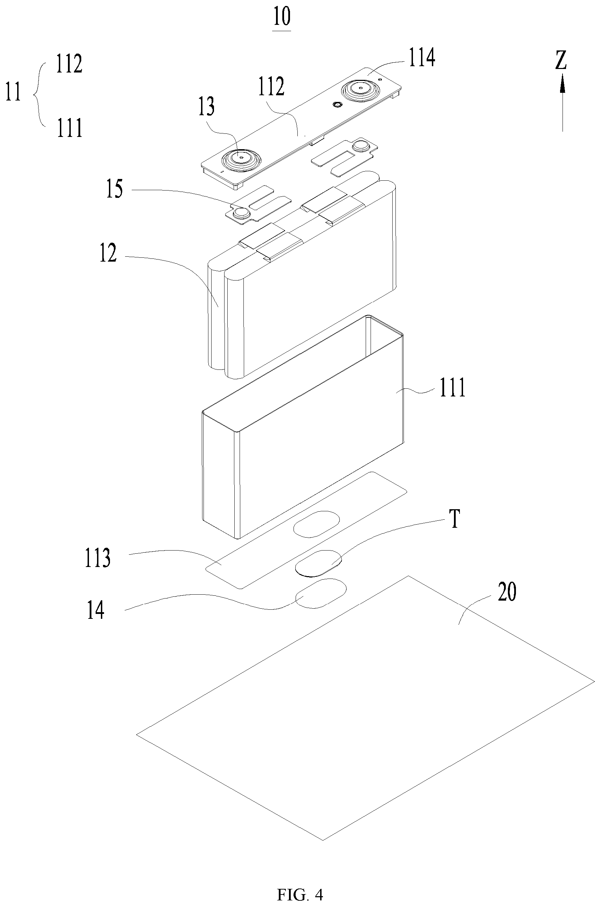

FIG. 4 is a schematic exploded view of the battery cell 10 shown in FIG. 3. As shown in FIG. 4, the battery cell 10 includes a shell 11, an electrode assembly 12 and an insulation film 20. The electrode assembly 12 is accommodated in the shell 11. The insulation film 20 wraps the shell 11 and covers at least a part of a structure of the shell 11.

The electrode assembly 12, as a core component for functions of charging and discharging of the battery cell 10, includes a positive electrode plate, a negative electrode plate and a separator. The positive electrode plate and the negative electrode plate are of opposite polarities. The separator is configured to dielectrically separate the positive electrode plate from the negative electrode plate. The electrode assembly 12 works primarily by relying on shuttling of metal ions between the positive electrode plate and the negative electrode plate.

The shell 11 is of a hollow structure and internally forms an accommodation cavity for accommodating the electrode assembly 12 and the electrolyte solution. The shell 11 may have various shapes, such as a cylinder or a cuboid. The shape of the shell 11 may be determined depending on the specific shape of the electrode assembly 12. For example, if the electrode assembly 12 is of a cylindrical structure, a cylindrical shell 11 may be selected; and if the electrode assembly 12 is of a cuboidal structure, a cuboidal shell 11 may be selected.

In some embodiments, the shell 11 includes a housing 111 and an end cap 112. The end cap 112 is hermetically connected to the housing 111 to form an accommodation space for accommodating the electrode assembly 12 and the electrolyte solution. In some examples, the housing 111 has an opening at one end, and one end cap 112 is disposed and fits and covers the opening of the housing 111. In some other examples, the housing 111 has openings at both opposite ends, two end caps 112 are disposed, and the two end caps 112 fit and cover the two openings of the housing 111 respectively.

Without limitation, the end cover 112 may adapt to the housing 111 in shape so as to fit the housing 111. Optionally, the end cover 112 may be made of a material with specified hardness and strength (for example, an aluminum alloy). Thus, the end cover 112 is less likely to deform when subjected to extrusion and collision, allowing the battery cell 10 to have higher structural strength and improved safety performance.

The housing 111 may have various shapes and sizes, such as a cuboid, a cylinder, or a hexagonal prism. Specifically, the shape of the housing 111 may be determined depending on the specific shape and size of the electrode assembly 12. The housing 111 may be made of various materials such as copper, iron, aluminum, stainless steel, or aluminum alloy, which are not particularly limited in these embodiments of the present application.

In some embodiments, functional components such as electrode terminals 13 may be disposed on the end cap 112. The electrode terminals 13 may be configured to be electrically connected to the electrode assembly 12 to output or input electrical energy of the battery cell 10.

A pressure relief mechanism T is disposed on the shell 11. When the electrode assembly 12 is thermally runaway, a high-temperature gas generated inside the housing 111 due to loss of control may reach the pressure relief mechanism T. The pressure relief mechanism T is ejected open under the action of an impact force, such that the high-temperature gas can be timely released, thereby improving the safety of the battery cell 10. It is hereby noted that the pressure relief mechanism T may be disposed on the end cap 112, and may also be disposed on the housing 111, which is not limited in these embodiments of the present application.

The insulation film 20 is disposed outside the shell 11 to serve a function of insulative protection. The structure of the insulation film 20 is described in detail below with reference to the drawings.

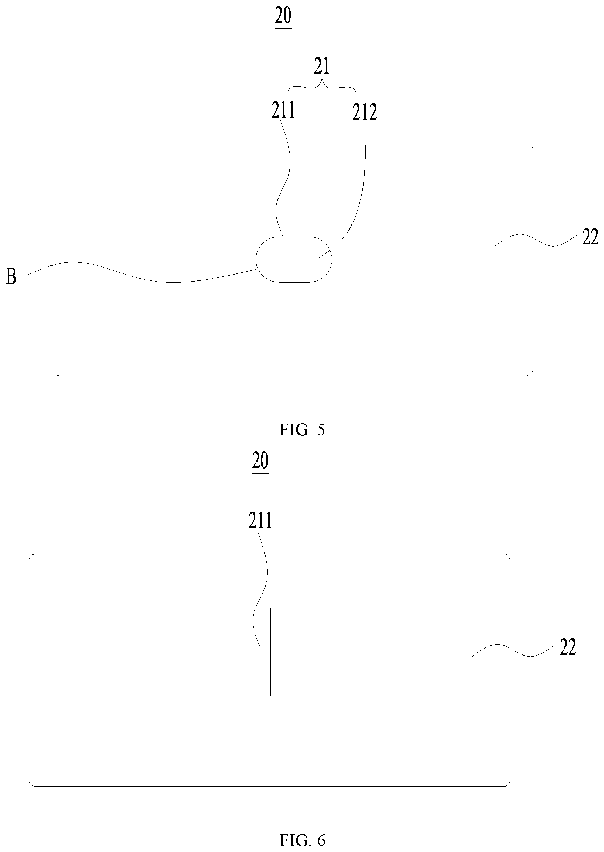

Referring to FIG. 4 and FIG. 5, an embodiment of the present application provides an insulation film 20 that is configured to wrap at least a part of a shell 11 of a battery cell 10. The insulation film 20 is provided with a fragile portion 21 that is configured to cover at least a part of a pressure relief mechanism T in the battery cell 10 mounted on the shell 11.

"Wrap" mentioned in this embodiment of the present application means that the insulation film 20 covers at least a part of a structure of the shell 11, and the insulation film 20 may fully cover the shell 11, or may also cover only part of the structure of the shell 11. As an example, the insulation film 20 may cover at least a part of a structure of a housing 111, or may also cover at least a part of a structure of an end cap 112.

The fragile portion 21 is disposed on the insulation film 20. A structural strength of at least a part of a structure of the fragile portion 21 is less than that of other structures of the insulation film 20 except the fragile portion 21. "Structural strength" mentioned in this embodiment of the present application refers to a property of fracture resistance of a corresponding structure. The higher the structural strength is, the less likely the structure is to fracture under the action of an external force; and the lower the structural strength is, the more likely the structure is to fracture under the action of the external force. Therefore, compared with the other structures of the insulation film 20, at least a part of the structure of the fragile portion 21 is more likely to be fractured and broken under the action of the external force.

It is hereby noted that a structural strength of only a part of positions of the fragile portion 21 may be less than that of the other structures of the insulation film 20, and alternatively, a structural strength of all the positions of the fragile portion 21 may be less than that of the other structures of the insulation film 20, which is not limited in this embodiment of the present application. In addition, the fragile portion 21 and the other structures of the insulation film 20 may be integrally formed, and then a structural strength of part of positions of the insulation film 20 is reduced by a process, thus forming the fragile portion 21. Or, the fragile portion 21 and the other structures of the insulation film 20 may also be separately prepared and formed, and then connected and fixed to form the complete insulation film 20, where a connection manner includes, but is not limited to, bonding, welding, or the like.

Additionally, parameters such as a material, size and shape of the fragile portion 21 are not limited in this embodiment of the present application. The material of the fragile portion 21 may be the same as or different from that of the other structures of the insulation film 20. The fragile portion 21 may be of a block structure or a strip-shaped structure. When the fragile portion 21 is of the block structure, the shape thereof includes, but is not limited to, a square, a circle, a triangle, or the like. When the fragile portion 21 is of the strip-shaped structure, the shape thereof includes, but is not limited to, a straight line, a curve, a fold line, or the like.

The pressure relief mechanism T is mounted on the shell 11. The pressure relief mechanism T can timely release the high-temperature gas inside the shell 11 when thermal runaway occurs, thereby ensuring the use safety of the battery cell 10. The fragile portion 21 covers at least a part of the pressure relief mechanism T. "The fragile portion 21 covers at least a part of the pressure relief mechanism T" mentioned in this embodiment of the present application means that the fragile portion 21 can fully or partially cover the pressure relief mechanism T.

When thermal runaway occurs, the pressure relief mechanism T will deform under the action of an internal pressure of the battery cell 10. Since the fragile portion 21 of the insulation film 20 can cover at least a part of the pressure relief mechanism T, the pressure relief mechanism T will be in contact with the fragile portion 21. Since the structural strength of at least a part of the structure of the fragile portion 21 is relatively low, the fragile portion 21 less hinders the pressure relief mechanism T. Under the action of the internal pressure of the battery cell 10, the pressure relief mechanism T and the fragile portion 21 will be simultaneously actuated. That is, the pressure relief mechanism T and the fragile portion 21 will be ruptured, shattered, torn, burst open, or the like. In this case, the high-temperature and high-pressure substances inside the battery cell 10 will be expelled as emissions out of actuated positions of the pressure relief mechanism T and the fragile portion 21. In this way, the pressure of the battery cell 10 can be relieved under a circumstance of a controllable pressure to avoid potential severer accidents from happening.

In this embodiment of the present application, the fragile portion 21 is disposed on the insulation film 20 and covers at least a part of the pressure relief mechanism T, such that when the battery cell 10 is thermally runaway, the insulation film 20 less hinders the pressure relief mechanism T, which ensures that the pressure relief mechanism T can be timely actuated to meet the pressure relief need of the battery cell 10, reduce the risk of long-time accumulation of high-temperature and high-pressure substances in the battery cell 10, and improve the safety of the battery cell 10.

In some embodiments, as shown in FIG. 4 and FIG. 5, the insulation film 20 includes a film body 22. The fragile portion 21 includes a nick structure 211 disposed on the film body 22.

The film body 22 is a main part of the insulation film 20 for realizing an insulation effect. The film body 22 includes an insulation material. As an example, the film body 22 is of a blue tape structure. The presence of the film body 22 can reduce the probability of direct contact of shells 11 of adjacent battery cells 10, or reduce the risk of a short circuit between a battery cell 10 and other structural components, and improve the use safety of the battery cell 10. Further, the film body 22 may include a waterproof material. In this way, after the battery cell 10 is provided with the insulation film 20, waterproof performance of the insulation film 20 may be improved.

The fragile portion 21 includes the nick structure 211 disposed on the film body 22. The nick structure 211 may be disposed penetrating through the film body 22, and may also be of a groove structure disposed on the film body 22. The forming manner of a nick is not limited in these embodiments of the present application. As an example, the nick structure 211 may be formed on the film body 22 by stamping, laser etching, cutting off, or the like.

The nick structure 211 may have various sizes and shapes. The size and shape of the nick structure 211 are not limited in these embodiments of the present application. The nick structure 211 may be of a closed ring structure B, and may also be of a linear structure. A thickness of the nick structure 211 is also not limited in these embodiments of the present application. The thickness of the nick structure 211 depends on the structural strength of the film body 22. If the structural strength of the film body 22 is relatively low, there is no need to set the thickness of the nick structure 211 to be overly small; and if the structural strength of the film body 22 is relatively high, there is a need to set the thickness of the nick structure 211 to be relatively small, or even there is a need to penetrate through the film body 22 by a process to form the nick structure 211.

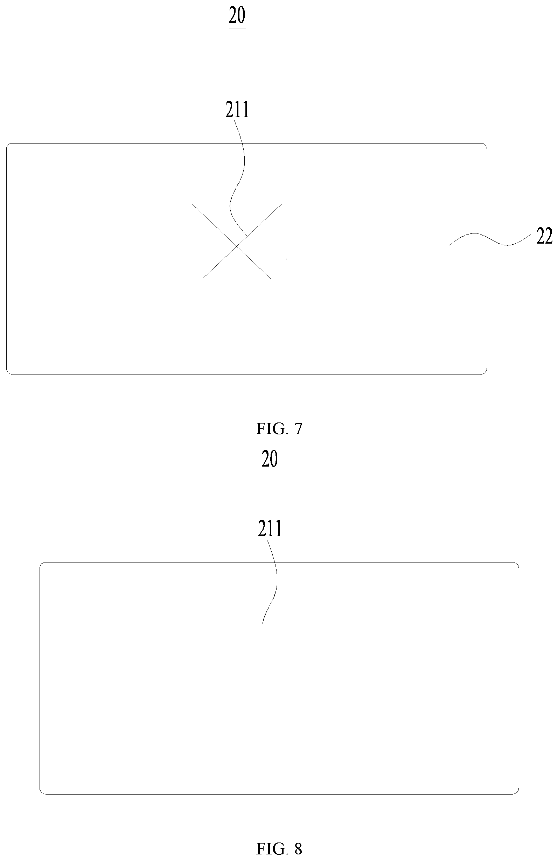

Additionally, the number of the nick structure 211 may be one or more. When there are a plurality of nick structures 211, the plurality of nick structures 211 may be distributed staggered with each other, and may also be disposed intersecting each other. As an example, referring to Fig. 6 to FIG. 8, the plurality of nick structures 211 may be in a cross shape, an X shape, a T shape, or the like.

In these embodiments of the present application, the nick structure 211 is disposed on the film body 22, and compared with other positions of the film body 22, the position of the nick structure 211 has a smaller thickness and a lower structural strength. Therefore, when the battery cell 10 is thermally runaway, the nick structure 211 will be more likely to be broken and ruptured under the action of an external force, thus forming a notch on the insulation film 20, which ensures that the pressure relief mechanism T can be timely actuated, and the high-temperature and high-pressure substances can be timely expelled out of the battery cell 10, thereby improving the safety of the battery cell 10.

Additionally, in the preparation process of the insulation film 20 in these embodiments of the present application, there is no need to additionally add other materials for forming the fragile portion 21. It is only necessary to add a step of nicking process on the basis of an existing process, which is easy to operate and will not increase the production cost of the insulation film 20.

In some embodiments, as shown in FIG. 4 and FIG. 5, the nick structure 211 closes in to form the closed ring structure B.

The closed ring structure B has various forms. As an example, referring to FIG. 5,

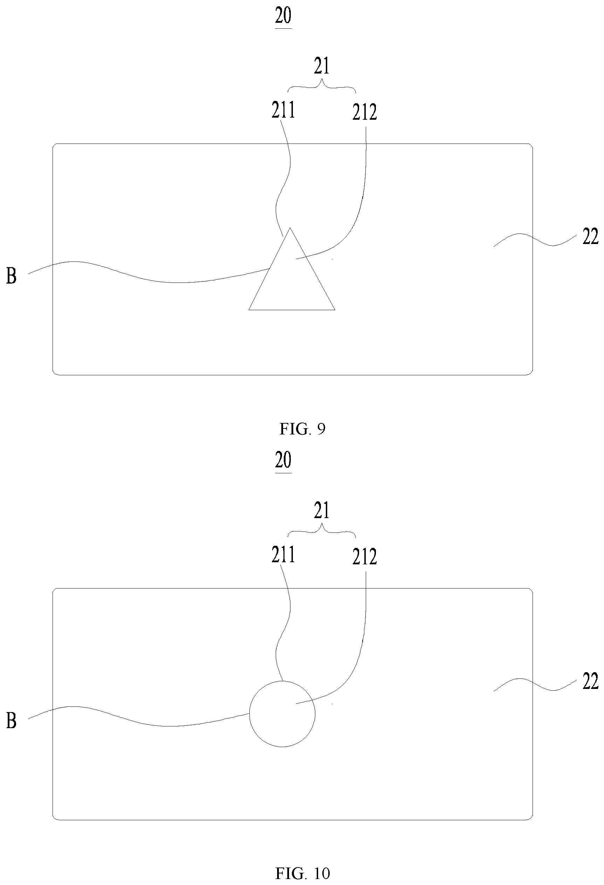

FIG. 9 and FIG. 10 together, the closed ring structure B may be an elliptically ring-shaped structure, a circular ring structure, a triangularly ring-shaped structure, or the like. The size of the closed ring structure B is not limited in these embodiments of the present application. An outer contour of the closed ring structure B may be located within an outer contour of the pressure relief mechanism T, or may also at least partially exceed the outer contour of the pressure relief mechanism T, or the closed ring structure B may also coincide with the outer contour of the pressure relief mechanism T.

It is hereby noted that when the nick structure 211 closes in to form the closed ring structure B, the fragile portion 21 further includes a center portion 212 enclosed by the closed ring structure B. The center portion 212 can cover at least a part of the structure of the pressure relief mechanism T. A structural strength of the center portion 212 may be greater than, less than or equal to that of other positions of the film body 22.

In these embodiments of the present application, the nick structure 211 closes in to form the closed ring structure B, such that when the battery cell 10 is thermally runaway, the center portion 212 can be detached from the film body 22, thus forming a large notch on a position of the insulation film 20 corresponding to the pressure relief mechanism T to ensure that more high-temperature and high-pressure substances can timely leave the battery cell 10 from the notch, thereby reducing the possibility of explosion of the battery cell 10 and further improving the safety of the battery cell 10.

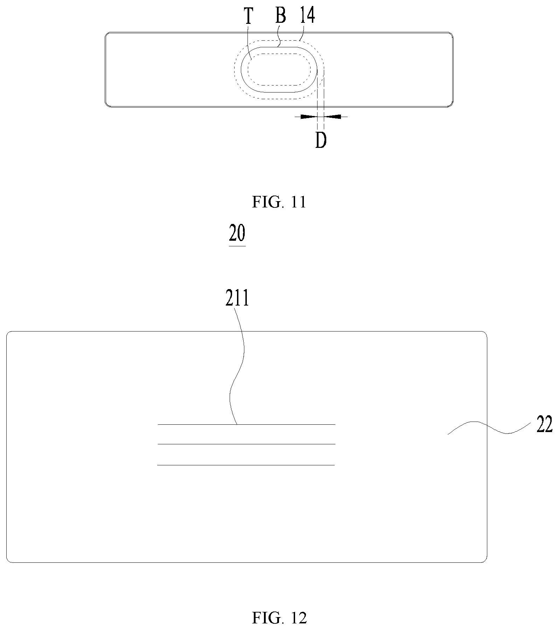

In some embodiments, referring to FIG. 4 and FIG. 11, the outer contour of the closed ring structure B is disposed at least partially exceeding the pressure relief mechanism T. FIG. 11 is a schematic structural diagram of a position of the pressure relief mechanism T in the battery cell 10 after the insulation film 20 wraps the shell 11.

The pressure relief mechanism T is disposed on a first wall 113 of the shell 11, and the outer contour of the closed ring structure B is disposed at least partially exceeding the pressure relief mechanism T. In other words, in a thickness direction Z of the first wall 113, a projection of the closed ring structure B is at least partially located outside that of the pressure relief mechanism T. The closed ring structure B may be disposed fully covering the pressure relief mechanism T, that is, all positions of the outer contour of the closed ring structure B exceed the pressure relief mechanism T. Or, the closed ring structure B covers only part of the structure of the pressure relief mechanism T, that is, one part of the outer contour of the closed ring structure B exceeds the pressure relief mechanism T, and the other part is located in the pressure relief mechanism T.

The insulation film 20 is configured to dielectrically separate the battery cell 10 from other components, while the center portion 212 covers at least a part of the structure of the pressure relief mechanism T and can provide an insulation effect on the pressure relief mechanism T. On this basis, in these embodiments of the present application, the outer contour of the closed ring structure B is disposed at least partially exceeding the pressure relief mechanism T, which ensures that the center portion 212 can have a certain size to meet the insulation function for the pressure relief mechanism T.

Additionally, when the battery cell 10 is thermally runaway, such design can ensure that the large notch can be formed on the position of the insulation film 20 corresponding to the pressure relief mechanism T so as to ensure more high-temperature and high-pressure substances can timely leave the battery cell 10 from the notch, thereby reducing the possibility of explosion of the battery cell 10 and further improving the safety of the battery cell 10.

In some embodiments, a contour outline of the closed ring structure B corresponds to that of the pressure relief mechanism T.

For example, if the pressure relief mechanism T is of a circular structure, the closed ring structure B is of a circular ring structure. If the pressure relief mechanism T is of an elliptical structure, the closed ring structure B is of an elliptically ring-shaped structure. If the pressure relief mechanism T is of a prismatic structure, the closed ring structure B is of a prismatic ring structure. Further, an outline dimension of the closed ring structure B may be formed by scaling an outline dimension of the pressure relief mechanism T by a specific rate, and such design is conducive to connection and fitting between the insulation film 20 and the shell 11.

Specifically, if the nick structure 211 is formed before the insulation film 20 wraps the shell 11, since the contour outline of the closed ring structure B corresponds to that of the pressure relief mechanism T, in the process of connecting the insulation film 20 to the shell 11, the closed ring structure B may be first aligned with the pressure relief mechanism T, and then the insulation film 20 wraps the shell 11, which can improve the positional accuracy of the insulation film 20 on the shell 11. As an example, a center of the closed ring structure B may be aligned with that of the pressure relief mechanism T so as to align the closed ring structure B with the pressure relief mechanism T.

In these embodiments of the present application, the contour outline of the closed ring structure B corresponds to that of the pressure relief mechanism T, such that the alignment difficulty of the insulation film 20 on the shell 11 is reduced to ensure the positional accuracy between the insulation film 20 and the shell 11. In addition, the alignment difficulty between the closed ring structure B and the pressure relief mechanism T may further be reduced to enable the closed ring structure B and the pressure relief mechanism T to be correspondingly disposed, such that when the battery cell 10 is thermally runaway, the insulation film 20 can be actuated at a corresponding position of the pressure relief mechanism T to meet the pressure relief need and improve the use safety of the battery cell 10.

In some embodiments, referring to FIG. 4 and FIG. 12, the nick structure 211 is plural in number, and the plurality of nick structures 211 are disposed on the film body 22 at intervals.

It can be seen from the foregoing content that the nick structures 211 may be formed on the film body 22 by stamping, laser etching, cutting off, or the like. On this basis, if the plurality of nick structures 211 are disposed intersecting each other, the insulation film 20 will be affected by dual or even more multiple processes at intersecting positions, which causes the insulation film 20 to be susceptible to the processes and punctured at the intersecting positions of a plurality of nicks in the forming process of the nick structures 211. If the nick structures 211 are formed after the insulation film 20 wraps the shell 11, the pressure relief mechanism T, the shell 11 or the like in the battery cell 10 is susceptible to the processes and has the risk of damaging and breaking in the forming process of the nick structures 211, thus affecting the normal use and yield rate of the battery cell 10.

However, in these embodiments of the present application, the plurality of nick structures 211 are disposed at intervals. Two adjacent nick structures 211 do not intersect. Therefore, in the forming process of the nick structures 211, any positions of the insulation film 20 will not be affected by dual or even multiple processes, which may reduce the risk of puncturing of the insulation film 20 due to the processes, reduce the impact on the pressure relief mechanism T and the shell 11 due to the formation of the nick structures 211, and improve the preparation reliability of the battery cell 10.

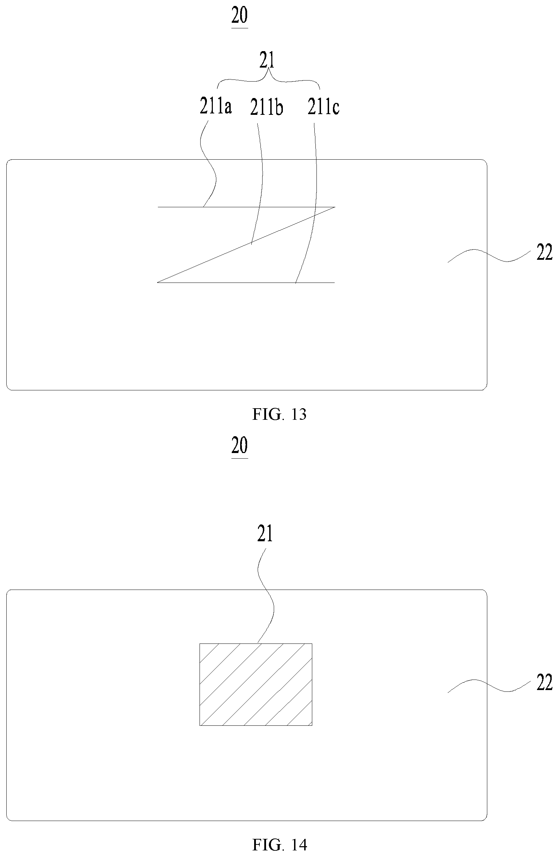

In some embodiments, referring to FIG. 4 and FIG. 13, the nick structure 211 includes a first nick segment 211a and a second nick segment 211b that are connected to each other, and extending directions of the first nick segment 211a and the second nick segment 211b intersect.

One end of the first nick segment 211a in the extending direction thereof is connected to one end of the second nick segment 211b in the extending direction thereof. The first nick segment 211a and the second nick segment 211b may be of a straight-line structure, and may also be of a curve structure. When the first nick segment 211a is of the curve structure, the extending direction of the first nick segment 211a is a direction of a line connecting two ends of the first nick segment 211a.

The extending directions of the first nick segment 211a and the second nick segment 211b intersect. The first nick segment 211a and the second nick segment 211b extend toward different positions of the insulation film 20 respectively. When the battery cell 10 is thermally runaway, the pressure relief mechanism T is affected by different pressures at different positions depending on different actual circumstances, and further, the insulation film 20 is affected by different pressures at different positions.

On this basis, in these embodiments of the present application, the first nick segment 211a and the second nick segment 211b are disposed to extend along different directions respectively, such that the insulation film 20 is provided with nicks corresponding to different positions of a region of the pressure relief mechanism T to ensure that when the battery cell 10 is thermally runaway, and when the pressure relief mechanism T is actuated at the different positions, the insulation film 20 may be timely ruptured to meet the pressure relief need, which is applicable to different circumstances.

It is hereby noted that the nick structure 211 may further include more nick segments in addition to the first nick segment 211a and the second nick segment 211b. As an example, the nick structure 211 further includes a third nick segment 211c, and the first nick segment 211a and the third nick segment 211c are connected to two ends of the second nick segment 211b respectively. The specific structure of the nick structure 211 may be designed according to actual needs, and is not limited in these embodiments of the present application.

In some embodiments, referring to FIG. 4 and FIG. 14, the fragile portion 21 is connected to the film body 22, and a structural strength of any positions of the fragile portion 21 is less than that of the film body 22.

The fragile portion 21 is of a block structure, and compared with the film body 22, the structural strength of each position of the fragile portion 21 is lower than that of the film body 22. The fragile portion 21 may be disposed fully covering the pressure relief mechanism T, or may also be disposed only partially covering the pressure relief mechanism T.

The fragile portion 21 can be formed in various manners. As an example, the fragile portion 21 may be formed by thinning part of a region of the insulation film 20. Or, the fragile portion 21 may be prepared from a material with a lower structural strength than the film body 22, and the fragile portion 21 is connected to the film body 22 to form the insulation film 20.

In these embodiments of the present application, since a region of the fragile portion 21 with a low structural strength has a larger area, the fragile portion 21 is more likely to be broken under the action of an external force. Such design can further reduce the hindering impact of the insulation film 20 on the pressure relief mechanism T when the battery cell 10 is thermally runaway, which ensures that the pressure relief mechanism T can be timely actuated to meet the pressure relief need of the battery cell 10.

In some embodiments, the fragile portion 21 can cover the pressure relief mechanism T.

The size of the fragile portion 21 may be greater than or equal to that of the pressure relief mechanism T. When the size of the fragile portion 21 is equal to that of the pressure relief mechanism T, a shape contour of the fragile portion 21 corresponds to and coincides with that of the pressure relief mechanism T.

When the battery cell 10 is thermally runaway, the pressure relief mechanism T deforms. In this case, since the fragile portion 21 can cover the pressure relief mechanism T, the deformation of the pressure relief mechanism T enables the pressure relief mechanism T to be in contact with a region of the insulation film 20 with a low structural strength and exert a certain pressure thereto, and under the action of the pressure, at least a part of a structure of the region is broken and ruptured, such that the pressure relief mechanism T can be actuated, thereby ensuring the pressure relief reliability of the battery cell 10 and improving use safety.

In these embodiments of the present application, the fragile portion 21 is disposed covering the pressure relief mechanism T, such that the hindering impact of the insulation film 20 on the pressure relief mechanism T is further reduced, which ensures that the pressure relief mechanism T can be timely actuated to meet the pressure relief need of the battery cell 10.

In some embodiments, a material of the fragile portion 21 is different from that of other positions of the film body 22, and a material strength of the fragile portion 21 is lower than that of the other positions of the film body 22.

"Material strength" mentioned in these embodiments of the present application refers to the ability of the material to resist damage under the action of an external force. Typically, a material strength of a structure is positively correlated with a structural strength thereof. Specifically, the larger the material strength is, the larger the structural strength corresponding thereto is, provided that parameters such as a size and a thickness are the same.

In these embodiments of the present application, the material strength of the fragile portion 21 is set to be less than that of the other positions of the film body 22, such that the material strength of the fragile portion 21 is lower than that of the film body 22, so as to meet the pressure relief need of the battery cell 10 and improve the safety of the pressure relief mechanism T.

It is hereby noted that parametric dimensions such as a thickness of the fragile portion 21 are not limited in these embodiments of the present application. As an example, the thickness of the fragile portion 21 may be greater than, less than or equal to that of the other positions of the film body 22.

According to a second aspect, as shown in FIG. 4 and FIG. 11, an embodiment of the present application provides a battery cell 10, including a shell 11, an electrode assembly 12, a pressure relief mechanism T and the insulation film 20 in any one of the foregoing embodiments. The electrode assembly 12 is accommodated in the shell 11. The pressure relief mechanism T is mounted on the shell 11. The insulation film 20 wraps at least a part of the shell 11. The fragile portion 21 is opposite to the pressure relief mechanism T of the shell 11.

It is hereby noted that the battery cell 10 provided by this embodiment of the present application has the beneficial effects of the insulation film 20 in any one of the foregoing embodiments. For details, reference is made to the foregoing description about the beneficial effects of the insulation film 20, and the details are omitted herein.

In some embodiments, as shown in FIG. 4 and FIG. 11, the shell 11 includes a first wall 113 and a second wall 114. The pressure relief mechanism T is mounted on the first wall 113. The battery cell 10 further includes electrode terminals 13 mounted on the second wall 114.

The first wall 113 and the second wall 114 are different surfaces on the shell 11. The first wall 113 and the second wall 114 may be adjacent surfaces. In this case, the first wall 113 and the second wall 114 intersect. Or, the first wall 113 and the second wall 114 may also be opposite surfaces. In this case, the first wall 113 and the second wall 114 are disposed in parallel. The shell 11 includes a housing 111 and an end cap 112, as an example, the first wall 113 and the second wall 114 may be different surfaces of the housing 111, or one of the first wall 113 and the second wall 114 is a surface of the end cap 112, the other one is a surface of the housing 111, or the shell 11 includes two end caps 112, and the first wall 113 and the second wall 114 are the two opposite end caps 112 respectively.

The electrode terminals 13 may be electrically connected to the electrode assembly 12 to output or input electrical energy of the battery cell 10. As an example, the battery cell 10 further includes current collection members 15 that are configured to electrically connect the electrode terminals 13 to the electrode assembly 12.

It can be seen from the foregoing content that the insulation film 20 will be disposed covering the pressure relief mechanism T, that is, the insulation film 20 will cover at least a part of a structure of the first wall 113. On this basis, in these embodiments of the present application, the electrode terminals 13 are disposed on the second wall 114 different from the first wall 113, so as to reduce the probability of shielding the electrode terminals 13 by the insulation film 20, ensure normal work of the electrode terminals 13, and realize reliable transmission of electrical energy of the battery cell 10.

In some embodiments, the insulation film 20 is disposed covering the first wall 113.

The pressure relief mechanism T is disposed on the first wall 113, and the insulation film 20 is disposed covering the first wall 113, which can ensure that all positions of the first wall 113 are dielectrically separated from an external component through the insulation film 20 while ensuring that the insulation need of the pressure relief mechanism T is met. Such design makes the electrical energy stored in the battery cell 10 unable to be transferred into an external structure through the first wall 113, thereby reducing the risk of electric leakage of the battery cell 10 at a corresponding position of the first wall 113 and improving the use safety of the battery cell 10.

In some embodiments, at least a part of the insulation film 20 wraps all surfaces of the shell 11 except the second wall 114. In other words, all the surfaces of the shell 11 except the second wall 114 are provided with the insulation film 20.

For all the surfaces of the shell 11 except the second wall 114, the insulation film 20 may fully cover corresponding surfaces, or may also cover only a part of the corresponding surfaces. Additionally, for the second wall 114, the insulation film 20 may cover at least a part of a structure of the second wall 114, or the insulation film 20 may also not be disposed on the second wall 114, which is not limited in these embodiments of the present application.

In these embodiments of the present application, any surfaces of shell 11 except the second wall 114 are provided with part of a structure of the insulation film 20. Such design can increase the degree of coverage of the shell 11 by the insulation film 20, thereby reducing the risk of electric leakage of a plurality of surfaces of the battery cell 10 to further improve insulation performance and improve the use safety of the battery cell 10.

In some embodiments, as shown in FIG. 4 and FIG. 11, the battery cell 10 further includes a protective film 14 connected to the first wall 113 and covering the pressure relief mechanism T. In the thickness direction Z of the first wall 113, the projection of the pressure relief mechanism T is located within that of the fragile portion 21, and the projection of the fragile portion 21 is located within that of the protective film 14.

The protective film 14 is disposed on a side of the pressure relief mechanism T oriented away from the electrode assembly 12, and a size of the protective film 14 is greater than that of the pressure relief mechanism T, such that the protective film 14 can cover and protect the pressure relief mechanism T. As an example, a contour shape of the protective film 14 may be the same as that of the pressure relief mechanism T, such that the protective film 14 can better cover the pressure relief mechanism T.

On this basis, in these embodiments of the present application, in the thickness direction Z, the projection of the fragile portion 21 is disposed within that of the protective film 14, thereby improving insulation reliability. Specifically, it can be seen from the foregoing content that the fragile portion 21 may include the nick structure 211 or the thinned structure formed by a process. Taking a laser etching process as an example, in the preparation process of the insulation film 20, part of the structure of the fragile portion 21 may be etched and penetrated due to the process, which results in the inability to meet the insulation need at part of the positions of the fragile portion 21. However, by disposing the projection of the fragile portion 21 within that of the protective film 14, it may be ensured that the battery cell 10 can have a dual insulation effect at a corresponding position of the fragile portion 21. Even if part of the structure of the fragile portion 21 is penetrated, the presence of the protective film 14 may still ensure the insulation effect of the battery cell 10 at the corresponding position, thereby reducing the risk of electric leakage.

In these embodiments of the present application, by disposing the protective film 14, and in the thickness direction Z, by locating the projection of the pressure relief mechanism T within that of the fragile portion 21 and locating the projection of the fragile portion 21 within that of the protective film 14, it is ensured that the battery cell 10 can have the dual insulation effect at the corresponding position of the fragile portion 21, thereby improving insulation reliability.

In some embodiments, as shown in FIG. 4 and FIG. 11, a shortest distance between an orthographic projection of the fragile portion 21 on the protective film 14 and an edge of the protective film 14 is D that satisfies: D ≥ 2 mm. As an example, D may be one of 2 mm, 2.2 mm, 2.5 mm and 3 mm.

The orthographic projection of the fragile portion 21 on the protective film 14 is the projection of the fragile portion 21 in the thickness direction Z of the first wall 113. "A shortest distance between an orthographic projection of the fragile portion 21 on the protective film 14 and an edge of the protective film 14 is D" mentioned in these embodiments of the present application refers to a shortest distance between an edge of the orthographic projection of the fragile portion 21 on the protective film 14 and the edge of the protective film 14.

Shortest distances D corresponding to different edges of the fragile portion 21 may be the same or different. As an example, a contour shape of the fragile portion 21 may be the same as that of the protective film 14, and a center of the orthographic projection of the fragile portion 21 on the protective film 14 coincides with that of the protective film 14. Such design enables the shortest distances D corresponding to the different edges of the fragile portion 21 to be the same.

In these embodiments of the present application, by setting D to D ≥ 2 mm, the edge of the fragile portion 21 can be kept at a certain distance from the edge of the protective film 14, thereby in the forming process of the fragile portion 21, reducing the process impact on the edge of the protective film 14, reducing the probability of detaching the protective film 14 from the first wall 113 due to the formation of the fragile portion 21, and ensuring the structural reliability of the protective film 14.

According to a third aspect, an embodiment of the present application provides a battery, including the battery cell 10 in any one of the foregoing embodiments.

It is hereby noted that the battery provided by this embodiment of the present application has the beneficial effects of the battery cell 10 in any one of the foregoing embodiments. For details, reference is made to the foregoing description about the beneficial effects of the insulation film 20 and the battery cell 10, and the details are omitted herein.

According to a fourth aspect, an embodiment of the present application provides an electrical device, including the battery cell 10 in any one of the foregoing embodiments. The battery cell 10 is configured to provide electrical energy.

According to some embodiments of the present application, referring to FIG. 4, FIG. 5 and FIG. 11, the battery cell 10 includes a shell 11, an electrode assembly 12, a pressure relief mechanism T, electrode terminals 13, a protective film 14 and an insulation film 20. The electrode assembly 12 is accommodated in the shell 11. The shell 11 includes a first wall 113 and a second wall 114. The first wall 113 and the second wall 114 are oppositely disposed. The pressure relief mechanism T is mounted on the first wall 113. The electrode terminals 13 are mounted on the second wall 114. The protective film 14 is connected to the first wall 113 and covers the pressure relief mechanism T. At least a part of the insulation film 20 wraps all surfaces of the shell 11 except the second wall 114.

The insulation film 20 includes a film body 22 and a fragile portion 21 disposed on the film body 22. The fragile portion 21 includes a nick structure 211 of a closed ring structure B and a center portion 212 inside the closed ring structure B. The fragile portion 21 and the pressure relief mechanism T are correspondingly disposed, and a contour outline of the closed ring structure B corresponds to that of the pressure relief mechanism T. The contour outline of the fragile portion 21 is located between a contour outline of the protective film 14 and the contour outline of the pressure relief mechanism T, and a shortest distance between the orthographic projection of the fragile portion 21 on the protective film 14 and an edge of the protective film 14 is D that satisfies: D ≥ 2 mm.

Finally, it is hereby noted that the foregoing embodiments are merely for describing the technical solutions of the present application rather than for limiting the present application. Although the present application has been described in detail with reference to the foregoing embodiments, a person of ordinary skill in the art should appreciate that they can still make modifications to the technical solutions described in the foregoing embodiments or make equivalent replacements to some or all technical features thereof. However, these modifications or replacements do not cause the essence of the corresponding technical solutions to depart from the scope of the technical solutions of the embodiments of the present application, and shall all fall within the scope of the claims and specification of the present application. In particular, as long as there is no structural conflict, the various technical features mentioned in the embodiments may be combined in any manner. The present application is not limited to the specific embodiments disclosed herein but includes all technical solutions falling within the scope of the claims.

## Claims

1. An insulation film, configured to wrap at least a part of a shell of a battery cell, the insulation film being provided with a fragile portion that is configured to cover at least a part of a pressure relief mechanism in the battery cell mounted on the shell.

2. The insulation film according to claim 1, comprising a film body, the fragile portion comprising a nick structure disposed on the film body.

3. The insulation film according to claim 2, wherein the nick structure closes in to form a closed ring structure.

4. The insulation film according to claim 3, wherein an outer contour of the closed ring structure is disposed at least partially exceeding the pressure relief mechanism.

5. The insulation film according to claim 3 or 4, wherein a contour outline of the closed ring structure corresponds to that of the pressure relief mechanism.

6. The insulation film according to any one of claims 2 to 5, wherein the nick structure is plural in number, and the plurality of nick structures are disposed on the film body at intervals.

7. The insulation film according to any one of claims 2 to 6, wherein the nick structure comprises a first nick segment and a second nick segment that are connected to each other, and extending directions of the first nick segment and the second nick segment intersect.

8. The insulation film according to any one of claims 1 to 7, comprising a film body, the fragile portion being connected to the film body, and a structural strength of any positions of the fragile portion being less than that of the film body.

9. The insulation film according to claim 8, wherein the fragile portion can cover the pressure relief mechanism.

10. The insulation film according to claim 8 or 9, wherein a material of the fragile portion is different from that of other positions of the film body, and a material strength of the fragile portion is lower than that of the other positions of the film body.

11. A battery cell, comprising:
a shell;
an electrode assembly, accommodated in the shell;
a pressure relief mechanism, mounted on the shell; and
the insulation film according to any one of claims 1 to 10, wrapping at least the part of the shell, the fragile portion being opposite to the pressure relief mechanism of the shell.

12. The battery cell according to claim 11, wherein the shell comprises a first wall and a second wall, the pressure relief mechanism is mounted on the first wall, and the battery cell further comprises electrode terminals mounted on the second wall.

13. The battery cell according to claim 12, wherein the insulation film is disposed covering the first wall.

14. The battery cell according to claim 13, wherein at least a part of the insulation film wraps all surfaces of the shell except the second wall.

15. The battery cell according to any one of claims 12 to 14, further comprising a protective film connected to the first wall and covering the pressure relief mechanism, in a thickness direction of the first wall, a projection of the pressure relief mechanism is located within that of the fragile portion, and the projection of the fragile portion is located within that of the protective film.

16. The battery cell according to claim 15, wherein a shortest distance between an orthographic projection of the fragile portion on the protective film and an edge of the protective film is D that satisfies: D ≥ 2 mm.

17. A battery, comprising the battery cell according to any one of claims 11 to 16.

18. An electrical device, comprising the battery cell according to any one of claims 11 to 16, the battery cell being configured to provide electrical energy.
